# EUROPÄISCHE PATENTSCHRIFT

(11) **EP 1 801 452 B1**
(45) Veröffentlichungstag und Bekanntmachung des Hinweises auf die Patenterteilung: **11.02.2009**
(21) Anmeldenummer: 06026128.6
(22) Anmeldetag: 16.12.2006
(51) Int. Cl.: F16F 15/139

(54) **Torsionsschwingungsdämpfer**
Torsional vibration damper
Amortisseur de vibrations de torsion

(30) Priorität: 24.12.2005 DE 102005062267
(43) Veröffentlichungstag der Anmeldung: 27.06.2007
(73) Patentinhaber: ZF Friedrichshafen AG, 88046 Friedrichshafen (DE)
(72) Erfinder: Schierling, Bernhard, 97273 Kürnach (DE); Bindig, Sebastian, 97259 Alitzheim (DE); Schauder, Benedikt, 97532 Üchtelhausen/Weipoltshausen (DE)

(56) Entgegenhaltungen:
- EP-A1- 0 529 669
- FR-A1- 2 676 102

## Beschreibung

Die Erfindung betrifft einen Torsionsschwinungsdämpfer gemäß dem Oberbegriff des Anspruches 1.

Ein derartiger Torsionsschwingungsdämpfer ist aus der DE 41 28 868 A1 bekannt und weist ein mit einem Antrieb verbundenes antriebsseitiges Übertragungselement, ein mit einem Abtrieb in Wirkverbindung bringbares, gegenüber dem antriebsseitigen Übertragungselement drehauslenkbares abtriebsseitiges Übertragungselement und eine zwischen den beiden Übertragungselementen vorgesehene Dämpfungseinrichtung mit Energiespeichergruppen auf. Die Energiespeichergruppen sind in einer Führungsbahn des antriebsseitigen Übertragungselementes aufgenommen stellen den Kontakt zum abtriebsseitigen Übertragungselement her, indem deren Beaufschlagung bei Zugbetrieb durch Ansteuerelemente des antriebsseitigen Übertragungselementes, bei Schubbetrieb dagegen durch Ansteuerelemente des abtriebsseitigen Übertragungselementes erfolgt. Das abtriebsseitige Übertragungselement besteht aus einer zur Aufnahme einer Reibungskupplung dienenden Schwungmasse und aus einer hieran befestigten Nabenscheibe, die, mit vorbestimmtem Umfangsversatz zueinander, Radialvorsprünge aufweist, die als Ansteuerelemente dieses Übertragungselementes dienen.

Die Energiespeichergruppe der Dämpfungseinrichtung stützt sich in ihren jeweiligen Endbereichen über Gleitelemente an einer radial äußeren Führungsbahn des antriebsseitigen Übertragungselementes ab. Zwar begünstigen die Gleitelemente eine Auslenkung der Energiespeichergruppe in Umfangsrichtung, jedoch sind diese ebenso wie auch die Energiespeichergruppe mit zunehmender Drehzahl einer immer höheren Fliehkraftwirkung ausgesetzt, die bevorzugt bei geringer Last dazu führt, dass die Gleitelemente an der Führungsbahn reibungsbedingt anhaften. Insbesondere bei einem Übergang zwischen Zug- und Schubbetrieb kann hierdurch zwischen dem jeweils äußersten Gleitelement und dem diesem benachbarten Ansteuerelement ein Freiweg entstehen mit der Wirkung, dass die Energiespeichergruppe keine Federspannarbeit leistet. Bei Zugbetrieb dreht ein Antrieb, wie beispielsweise die Kurbelwelle einer Brennkraftmaschine, zunächst das antriebsseitige Übertragungselement im wesentlichen lastfrei hoch, während das abtriebsseitige Übertragungselement auf seinem bisherigen Drehzahlniveau verharrt. Hierdurch wird das antriebsseitige Übertragungselement mit Schwung ausgelenkt, und schlägt, nach Durchlaufen des Freiwegs, mit Wucht auf das benachbarte Gleitelement, um über dieses die angesteuerte Energiespeichergruppe und damit das abtriebsseitige Übertragungselement stark zu beschleunigen. Mit der Drehzahlzunahme am abtriebsseitigen Übertragungselement geht eine Drehzahlabnahme am antriebsseitigen Übertragungselement einher, was sich im Kraftfahrzeug als komfortmindernder Ruck bemerkbar macht. Entsprechend wird dieser Vorgang auch bei Schubbetrieb wirksam, wenn nämlich ein Abtrieb, wie beispielsweise eine Getriebeeingangswelle, bei bewegtem Kraftfahrzeug und fliehkraftbedingtem Freiweg zwischen dem Ansteuerelement des abtriebsseitigen Übertragungselementes und dem benachbarten Gleitelement ein lastfreies Hochdrehen des abtriebsseitigen Übertragungselementes zulässt, während das antriebsseitige Übertragungselement zunächst noch auf seinem bisherigen Drehzahlniveau verharrt. Dies hat eine Auslenkung des abtriebsseitigen Übertragungselement mit Schwung zur Folge, das, nach Durchlaufen des Freiwegs, mit Wucht auf das benachbarte Gleitelement schlägt, um über dieses und die angesteuerte Energiespeichergruppe das antriebsseitige Übertragungselement stark zu beschleunigen. Die Drehzahlzunahme am antriebsseitigen Übertragungselement geht mit einer Drehzahlabnahme am abtriebsseitigen Übertragungselement einher.

Der Erfindung liegt die Aufgabe zugrunde, einen Torsionsschwingungsdämpfer derart auszubilden, dass starke Drehzahländerungen an den Übertragungselementen beim Übergang zwischen Zug- und Schubbetrieb und damit das auftreten komfortmindernder Rucke wirksam vermieden werden.

Diese Aufgabe wird durch einen Torsionsschwingungsdämpfer gemäß dem Anspruch 1 gelöst. Durch eine Reibvorrichtung, die bei einer vorbestimmten Fliehkraft mit einer Reibfläche eines ersten Übertragungselementes in Wirkverbindung zu den Ansteuerelementen eines zweiten Übertragungselementes tritt, wird zwar ungeachtet des jeweiligen Betriebszustandes des Torsionsschwingungsdämpfers und damit der Relativauslenkung der Übertragungselemente zueinander sowie des Verformungszustandes der Energiespeichergruppe eine Reibwirkung erzeugt, die allein fliehkraftabhängig ist, deren Wirkung aber gerade dann von besonderer Bedeutung ist, wenn bei geringer Last die Energiespeichergruppe fliehkraftbedingt an einer Reibfläche, insbesondere gebildet durch eine die Energiespeichergruppe radial umschließenden Führungsbahn für dieselbe, anhaftet, und dadurch zwischen dem jeweils äußersten Energiespeicher oder einem demselben zugeordneten Gleitelement gegenüber dem jeweils benachbarten Ansteuerelement ein Freiweg verbleibt, in welchem allein die Reibvorrichtung wirksam ist, und hierbei ein Reibmoment aufbaut.

Aufgrund der Drehzahlabhängigkeit der Reibvorrichtung wird gerade dann, wenn aufgrund eines Überganges zwischen Zug- und Schubbetrieb das Risiko besteht, dass eines der Übertragungselemente - bei Zugbetrieb das antriebsseitige Übertragungselement und bei Schubbetrieb das abtriebsseitige Übertragungselement - jeweils ein lastfreies Hochdrehen erfährt, um im Anschluss daran das jeweils andere Übertragungselement zu beschleunigen, die Reibvorrichtung aufgrund ihrer Fliehkraftabhängigkeit verstärkt wirksam. Dadurch wird sowohl das lastfreie Hochdrehen des einen Übertragungselementes als auch das anschließende Beschleunigen des anderen Übertragungselementes zumindest reduziert, und damit sind eventuelle komfortmindernde Rucke im Kraftfahrzeug weitgehend reduziert oder sogar völlig unterdrückt.

Diese vorteilhafte Wirkung wird von der Reibvorrichtung erbracht, ohne bei anderen Betriebszuständen mit Nachteilen behaftet zu sein. Bei den niedrigen Drehzahlen bei Leerlaufbetrieb beispielsweise ist die Reibwirkung aufgrund der geringen Fliehkraftwirkung sehr klein, so dass die Reibvorrichtung nicht nennenswert in Erscheinung tritt, zumal wenn dem Reibelement ein Radialenergiespeicher zugeordnet ist, welcher entgegen der Fliehkraft wirkt, und damit bis zum Überschreiten einer unteren Grenzdrehzahl die Wikrung der Reibvorrichtung völlig vermeidet. Aber auch bei höheren Drehzahlen, beispielsweise oberhalb von 2 500 Umdrehungen/Minute stellt sich trotz der nun höheren Reibung kein Nachteil ein, da in diesem Drehzahlbereich die Drehschwingungsanregung vergleichsweise gering und daher kaum von einer geringfügig abnehmenden Entkopplungsgüte beeinflussbar ist.

Andererseits lässt sich, bei Zuordnung eines in Richtung der Fliehkraft wirksamen Radialenergiespeichers zum Reibelement, das letztgenannte bereits bei Stillstand des entsprechenden Übertragungselementes und damit auch ohne die Wirkung' der Fliehkraft in Anlage an der Reibfläche des anderen Übertragungselementes halten. Auf diese Weise kann die Reibvorrichtung auch bei einem Start/Stop-Vorgang, der mit Drehzahlen deutlich unterhalb der Drehzahl bei Leerlaufbetrieb abläuft, ihre vorteilhafte Wirkung entfalten.

Neben der Drehzahfabhängigkeit der Reibvorrichtung ist mit Vorzug die Masse eines Reibelementes derselben sowie dessen Werkstoffbeschaffenheit von Bedeutung. Ein höheres spezifisches Gewicht ergibt eine höhere Wirkung für die Reibvorrichtung, die, wenn sowohl für einen Reibbereich am Reibelement als auch für eine Reibfläche an der Führungsbahn des die Energiespeichergruppe aufnehmenden Übertragungselementes jeweils ein metallischer Werkstoff Verwendung findet, nochmals gesteigert werden kann. Damit dieser Vorteil nicht durch erhöhten Verschleiß erkauft werden muss, kann sowohl der Reibbereich am Reibelement als auch die Reibfläche der Führungsbahn einer festigkeitserhöhenden Fertigungsbehandlung unterzogen werden, beispielsweise durch einen Härtevorgang. Andererseits kann durch eine Beschichtung an zumindest einem der in Reibkontakt miteinander stehenden Abschnitte, bevorzugt des Reibbereiches des Reibelementes, mit einem Werkstoff guter Gleiteigenschaft, wie beispielsweise Kunststoff, eine Reduzierung der Reibwirkung erzielt werden, sollte dies erforderlich sein. Bei einstückiger Ausbildung dieser Beschichtung des Reibbereiches und der Axialbegrenzungen für das Reibelement ist das letztgenannte ohne Zusatzaufwand herstellbar.

Mit Vorzug ist die Energiespeichergruppe am antriebsseitigen Übertragungselement aufgenommen, das somit auch über die Führungsbahn mit der Reibfläche verfügt. Die Reibvorrichtung ist dann dem Ansteuerelement des abtriebsseitigen Übertragungselementes zugeordnet, das mit Vorzug als Radialvorsprung an einer Nabenscheibe dieses Übertragungselementes ausgebildet ist, und an seinem radial äußeren Ende eine Aufnahmetasche für je ein im wesentlichen radial verlagerbares Reibelement der Reibvorrichtung aufweist. Da die Führungsbahn des antriebsseitigen Übertragungselementes die Radialvorsprünge der Nabenscheibe radial umschließt, genügt für das Reibelement eine Aufnahme in der Aufnahmetasche, bei welcher eine zumindest im wesentlichen radiale Auslenkbewegung des Reibelementes gegenüber der Aufnahmetasche in Richtung zur Führungsbahn zugelassen wird.

Die Erfindung ist nachfolgend anhand von Ausführungsbeispielen beschrieben. Es zeigt:
- Fig. 1: einen Torsionsschwingungsdämpfer mit einem antriebsseitigen Übertragungselement und einem eine Nabenscheibe mit Ansteuerelementen für Energiespeichergruppen aufweisenden abtriebsseitgem Übertragungselement;
- Fig. 2: eine Herauszeichnung eines Ausschnittes der Nabenscheibe aus Blickrichtung A in Fig. 1 mit Darstellung eines mit einem Reibelement einer Reibvorrichtung ausgebildeten Ansteuerelementes;
- Fig. 3: eine Darstellung des Ansteuerelementes der Nabenscheibe sowie des Reibelementes gemäß der Schnittlinie III - III in Fig. 2;
- Fig. 4: wie Fig. 2, aber mit im Querschnitt T-förmigem Reibelement;
- Fig. 5: eine Darstellung des Ansteuerelementes der Nabenscheibe sowie des Reibelementes gemäß der Schnittlinie V - V in Fig. 4;
- Fig. 6: wie Fig. 5, aber mit axial mehrteiliger Ausbildung des Reibelementes;
- Fig. 7: wie Fig. 4, aber mit Beschichtung eines Reibbereiches des Reibelementes
- Fig. 8: eine Darstellung des Ansteuerelementes der Nabenscheibe sowie des Reibelementes gemäß der Schnittlinie VIII - VIII in Fig. 7;
- Fig. 9: wie Fig. 4, aber mit einem auf das Reibelement einwirkenden Radialenergiespeicher;
- Fig.10: wie Fig. 7, aber mit einem einer Trennstelle zwischen Teilen des Reibelementes, die sich im wesentlichen senkrecht zueinander erstrecken;
- Fig. 11: eine Darstellung des Ansteuerelementes der Nabenscheibe sowie des Reibelementes gemäß der Schnittlinie XI - XI in Fig.10;

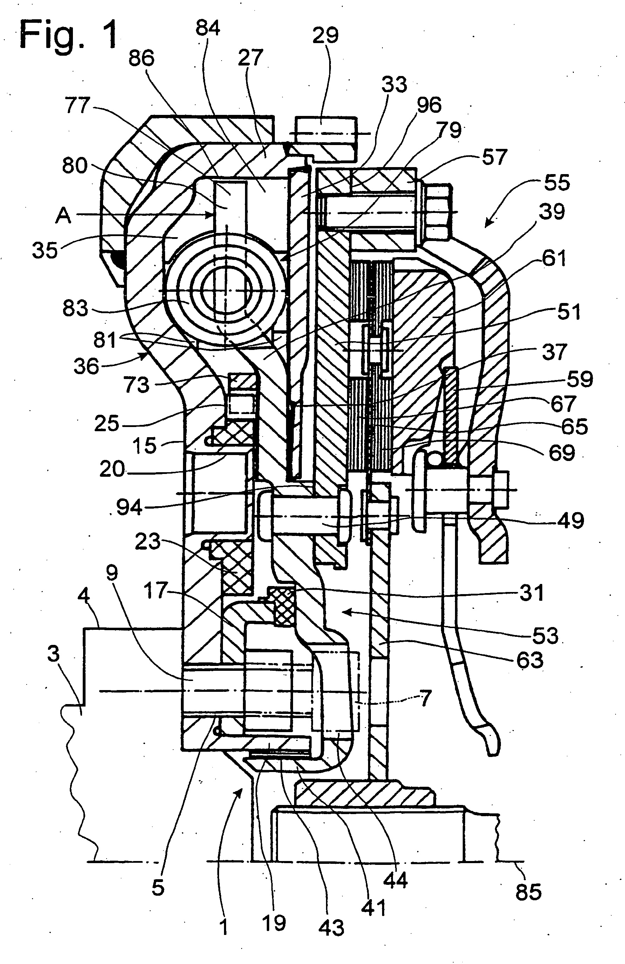

In Fig. 1 ist ein um eine Mittenachse 85 drehbarer Torsionsschwingungsdämpfer dargestellt, der an einem Antrieb 1, wie beispielsweise einer Kurbelwelle 3 einer Brennkraftmaschine, aufgenommen ist. Hierzu weist die Kurbelwelle 3 an ihrem freien Ende einen Flansch 4 auf, der mit Gewindebohrungen 5 ausgebildet ist, die zur Aufnahme von Befestigungsmitteln 7 in Form von Schrauben 9 vorgesehen sind, deren Schaft jeweils in eine der Gewindebohrungen 5 einführbar ist. Der Schaft jeder Schraube 9 durchgreift weiterhin Durchgänge eines sich im wesentlichen nach radial außen erstreckenden Primärflansches 15, der Teil eines antriebsseitigen Übertragungselementes 36 ist, sowie einer Anlagescheibe 17, die axial zwischen dem Kopf der Schraube 9 und dem Primärflansch 15 eingespannt ist. Der Primärflansch 15 weist radial innen eine Primärnabe 19 auf, die sich in einer von der Kurbelwelle 3 abgewandten Richtung erstreckt. Im radial mittleren Bereich ist der Primärflansch 15 mit einer Lagerausdrückung 20 versehen, die ein Planetenrad 23 eines Planetengetriebes 25 drehbar aufnimmt. Im radial äußeren Bereich geht der Primärflansch 15 in eine sich im wesentlichen axial erstreckende Ringwand 27 über, die radial außen einen Zahnkranz 29 trägt, der mit einem nicht gezeigten Anlasserritzel in Drehverbindung bringbar ist. Diese Ringwand 27 dient zur Aufnahme einer nach radial innen laufenden Dichtungswand 33, die zusammen mit der Ringwand 27 und dem Primärflansch 15 eine Fettkammer 35 umschließt, die zumindest teilweise mit viskosem Medium befüllt und Teil des antriebsseitigen Übertragungselementes 36 ist. Zur Abdichtung dieser Fettkammer 35 ist an der Dichtungswand 33 eine Axialeindrückung 37 vorgesehen, die bis auf Spaltbreite an den zugeordneten Bereich einer Nabenscheibe 39 herangeführt ist, die im radial inneren Bereich eine auf die Kurbelwelle 3 zu gerichtete Sekundärnabe 41 aufweist.

Radial zwischen der bereits erwähnten Primärnabe 19 des Primärflansches 15 und der Sekundärnabe 41 der Nabenscheibe 39 ist eine Radiallagerung 43 vorgesehen, die im vorliegenden Fall als Gleitlagerung ausgebildet ist. Radial außerhalb der Sekundärnabe 41 ist die Nabenscheibe 39 mit einer Durchgangsöffnung 44 zum Durchstecken der Befestigungsmittel 7 ausgebildet. Außerdem wird der Axialabstand der Nabenscheibe 39 gegenüber dem Primärflansch 15 über eine Axiallagerung 31 eingestellt, die axial zwischen der Anlagescheibe 17 und der Nabenscheibe 39 gehalten ist. Noch weiter radial außen ist eine Vernietung 49 vorgesehen, durch welche eine Verbindung der Nabenscheibe 39 zu einem abtriebsseitigen Schwungmassenelement 51 hergestellt wird, das ebenso wie die Nabenscheibe 39 als abtriebsseitiges Übertragungselement 53 wirksam ist und in an sich bekannter Weise zur Aufnahme einer Reibungskupplung 55 dient, die in einem Kupplungsgehäuse 57 eine Membranfeder 59 und eine Anpressplatte 61 sowie eine durch dieselben beaufschlagbare Kupplungsscheibe 63 mit beidseits eines Trägers 65 derselben aufgenommenen Reibbelägen 67, 69 aufnimmt.

Zurückkommend auf die Nabenscheibe 39 weist diese radial außerhalb der Vernietung 49 eine Innenverzahnung 73 auf, mit welcher sie in Eingriff mit der Verzahnung des zuvor bereits erwähnten Planetenrades 23 steht. Die Nabenscheibe 39 ist demnach als Hohlrad 75 des Planetengetriebes 25 wirksam.

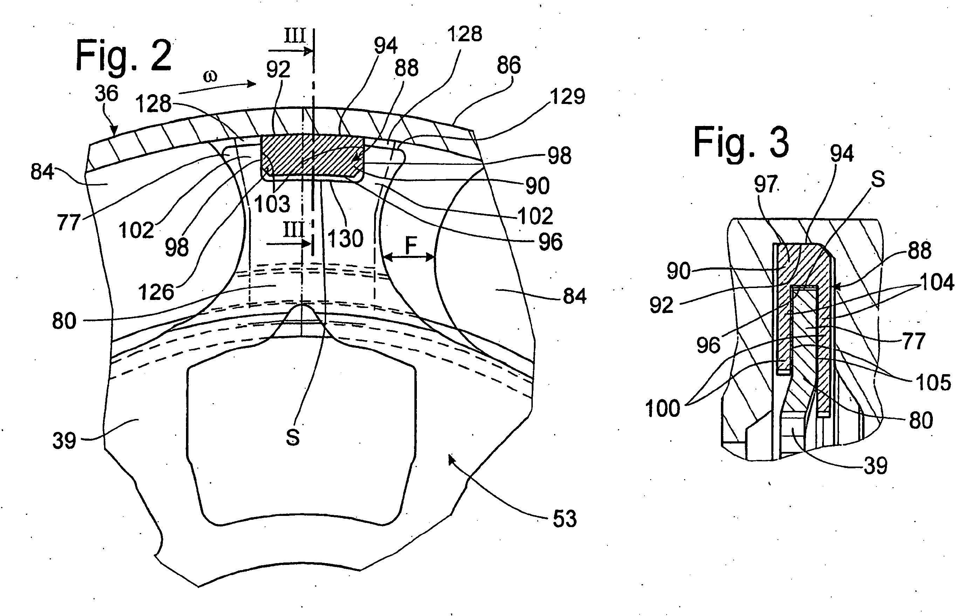

Am Umfangsbereich der Nabenscheibe 39 sind, gebildet durch in vorbestimmten Winkelabständen voneinander vorgesehenen Radialvorsprüngen 80, abtriebsseitige Ansteuerelemente 77 einer mit Energiespeichergruppen 83 versehenen Dämpfungseinrichtung 79 angeformt. Ein entsprechendes antriebsseitiges Ansteuerelement 81 ist am Primärflansch 15 und ein weiteres an der Dichtungswand 33 befestigt, und zwar jeweils an der Fettkammerseite des entsprechenden Elementes. Die Energiespeichergruppe 83 stützt sich nach radial außen über eine Mehrzahl von Gleitelementen 84 (vgl. hierzu Fig. 2), wie sie auch der DE 41 28 868 A1 (mit den Bezugsziffern 33 und 39) dargestellt sind, an einer radial äußeren Führungsbahn 86 des abtriebsseitigen Übertragungselementes 53 radial ab.

Die Fig. 2 zeigt einen Ausschnitt der aus Fig. 1 bereits bekannten Nabenscheibe 39, und zwar mit besonderer Darstellung eines der als abtriebsseitige Ansteuerelemente 77 wirksamen Radialvorsprünge 80. Dieses Ansteuerelement 77 soll nachfolgend auch unter Verwendung der Fig. 3 erläutert werden, welche eine Schnittdarsstellung gemäß der Schnittlinie III-III in Fig. 2 darstellt.

Das abtriebsseitige Ansteuerelement 77 ist mit einer Aufnahmetasche 96 für ein Reibelement 90 einer Reibvorrichtung 88 versehen, wobei sich die Aufnahmetasche 96, ausgehend vom radial äußeren Bereich des abtriebsseitigen Ansteuerelementes 77, bis zum Erreichen einer Grundfläche 130 im wesentlichen nach radial innen erstreckt. In Umfangsrichtung ist die Aufnahmetasche 96 beidseits durch Umfangsbegrenzungen 102 bemessen. Da das Reibelement 90 mit einem in die Aufnahmetasche 96 greifenden Steg 126 in Umfangsrichtung derart dimensioniert ist, dass es mit beiden Umfangsseiten 103 gleichzeitig an den Umfangsbegrenzungen 102 zur Anlage kommt, dienen diese Umfangsbegrenzungen 102 als eine in Umfangsrichtung wirksame, erste Bewegungssicherung 98 des Reibelementes 90 gegenüber dem abtriebsseitigen Ansteuerelement 77.

In Umfangsrichtung beidseits des Stegs 126 des Reibelementes 90 schließen sich Stützlaschen 128 an, die zusammen mit dem Steg 126 eine Reibelementenbasis 97 bilden. Di Stützlaschen 128 kommen radial außen am Umfangsbereich des abtriebsseitigen Ansteuerelementes 77 zur Auflage und begrenzen damit die Eindringtiefe des Steges 126 in die Aufnahmetasche 96, so dass zwischen der radialen Innenseite 127 des Stegs 126 und der benachbarten Grundfläche 130 der Aufnahmetasche 96 ein Spalt S verbleibt. An ihren vom Außenumfang 129 der abtriebsseitigen Ansteuerelemente 77 abgewandten Radialseiten verfügen die Stützlaschen 128 gemeinsam mit dem Steg 126 über einen Reibbereich 92, der zur in Anlagebringung an der als Reibfläche 94 für die Reibvorrichtung 88 dienenden Führungsbahn 86 des antriebsseitigen Übertragungselementes 36 dient. Des weiteren bilden die Stützlaschen 128 gemeinsam mit dem Steg 126, wie Fig. 3 deutlich zeigt, Axialbegrenzungen 104, die sich, ausgehend vom Außenumfang 129 des abtriebsseitigen Ansteuerelementes 77, axial beidseits desselben nach radial innen erstrecken. Da das abtriebsseitige Ansteuerelement 77 mit seinen Axialseiten 105 für jede der beiden Axialbegrenzungen 104 eine axiale Abstützung bildet, entsteht eine in Axialrichtung wirksame, zweite Bewegungssicherung 100 für das Reibelement 90 gegenüber dem abtriebsseitigen Ansteuerelement 77.

Die Reibvorrichtung 88 ist wie folgt wirksam:

Es wird davon ausgegangen, dass der Torsionsschwingungsdämpfer mit höherer Drehzahl und unter geringer Last im Zugbetrieb wirksam ist. Unter diesen Bedingungen können die auf die Gleitelemente 84 ausgeübten Fliehkräfte bewirken, dass die Gleitelemente 84 sich in einer vom zugeordneten Ansteuerelement 77 entfernten Position radial außen an der Führungsbahn 86 des antriebsseitigen Übertragungselementes 36 anhaften. Eine derartige Situation, bei welcher ein Freiweg F auftritt, ist in Fig. 2 zeichnerisch dargestellt. Wechselt nun der Betriebszustand von Zugbetrieb auf Schubbetrieb, so wird die Nabenscheibe 39 in der in Fig. 2 als Pfeil eingezeichneten Drehrichtung ω angetrieben. Bis zum Erreichen des Gleitelementes 84 und damit der demselben zugeordneten Energiespeichergruppe 83 (Fig. 1), also entlang des Freiweges F, bewegt sich die Nabenscheibe 39 und damit das abtriebsseitige Ansteuerelement 77 ungedämpft, d.h. frei von der Wirkung der Energiespeichergruppe 83. Um ein hierdurch bedingtes, hartes Aufprallen des abtriebsseitigen Übertragungselementes 77 auf das in Drehrichtung benachbarte Gleitelement 80 zu dämpfen, tritt die Wirkung der Reibvorrichtung 88 gerade innerhalb des Freiweges F vorteilhaft in Erscheinung. Aufgrund der zuvor erwähnten, höheren Drehzahl am Torsionsschwingungsdämpfer wird das Reibelement 90 unter deutlich spürbarer Fliehkraft mit seinem Reibbereich 92 nach radial außen gegen die Reibfläche 94 des antriebsseitigen Übertragungselementes 36 gepresst, und erzeugt dadurch eine Reibwirkung, welche die Bewegung des abtriebsseitigen Ansteuerelementes 77 in Richtung zum Gleitelement 84 deutlich hemmt. Mit Vorzug besteht das Reibelement 90 aus einem Werkstoff hohen spezifischen Gewichtes, so dass eine besonders deutliche Reibwirkung erzielbar ist. Sofern sowohl das Reibelement 90 als auch die Führungsbahn 86 des antriebsseitigen Übertragungselementes 36 hierbei aus einem metallischen Werkstoff bestehen, liegt zusätzlich werkstoffbedingt eine beträchtliche Reibwirkung zwischen dem Reibbereich 92 des Reibelementes 90 und der Reibfläche 94 des antriebsseitigen Übertragungselementes 36 vor. Um hierbei eventuelle Schäden an wenigstens einem dieser beiden Reibpartner zu vermeiden, kann es zweckmäßig sein, wenigstens einen der beiden Reibpartner, mit Vorzug allerdings beide Reibpartner, einer festigkeitserhöhenden Fertigungsbehandlung, wie beispielsweise einem Härtevorgang, zu unterziehen. Alternativ kann die Führungsbahn 86 durch ein an sich bekanntes und somit zeichnerisch nicht dargestelltes Einlegeband armiert sein. Im übrigen wird die Reibkontaktstelle der beiden Reibpartner durch das in der Fettkammer 35 enthaltene viskose Medium geschmiert.

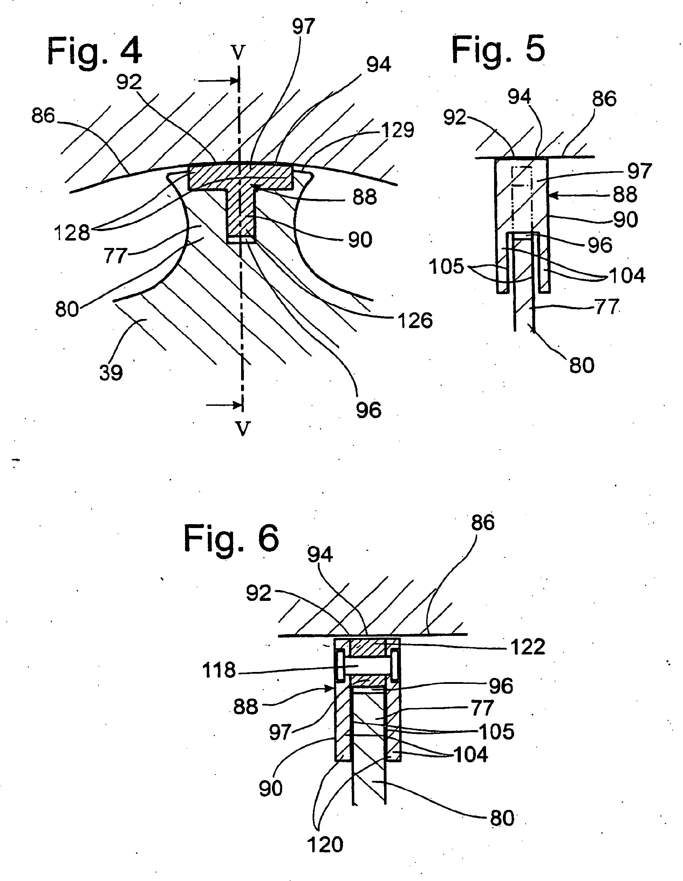

Die in den Fig. 4 und 5 gezeigte Reibvorrichtung unterscheidet sich von derjenigen in den Fig. 2 und 3 im Wesentlichen durch eine geringfügig andere geometrische Ausgestaltung, was sich insbesondere bei der Querschnittsdarstellung des Reibelementes 90 in Fig. 4 erkennen lässt. Abweichend von der Ausführung nach Fig. 2 sind hier nämlich die Stützlaschen 128 in Radialrichtung deutlich kräftiger ausgebildet, und in entsprechende Bereiche der Aufnahmetasche 96 abgesenkt, während der die beiden Stützlaschen 128 miteinander verbindende Steg 126 in Umfangsrichtung schmäler dimensioniert ist als bei Fig. 2, dafür aber radial tiefer in die Aufnahmetasche 96 hineingeführt ist.

Während das Reibelement 90 der Reibvorrichtung 88 in Fig. 5 in Achsrichtung einstückig ausgebildet und bevorzugt als Sinterteil hergestellt ist, zeigt Fig. 6 eine mehrteilige Ausführung mit einem axial mittigen Trägerring 122, an welchem beidseits über eine Vernietung 118 Axialbegrenzungen 104 in Form von Deckplatten 120 befestigt sind. Rein funktional unterscheiden sich die Ausführungen der Fig. 5 und 6 allerdings nicht voneinander. Alternativ kann anstelle der Vernietung 118 auch eine nicht gezeigte Verschweißung der Deckplatten 120 mit,dem Trägerring 122 vorgenommen werden. Die Axialbegrenzungen 104 können bei Verbindung mit dem Trägerring 122 mittels einer Vernietung 118 aus einem anderen Werkstoff bestehen als der Trägerring 122. Bei einer Verbindung der Axialbegrenzungen 104 mit dem Trägerring 122 mittels einer Verschweißung eignen sich dagegen gleiche Werkstoffe, wie beispielsweise schweißbare Stähle.

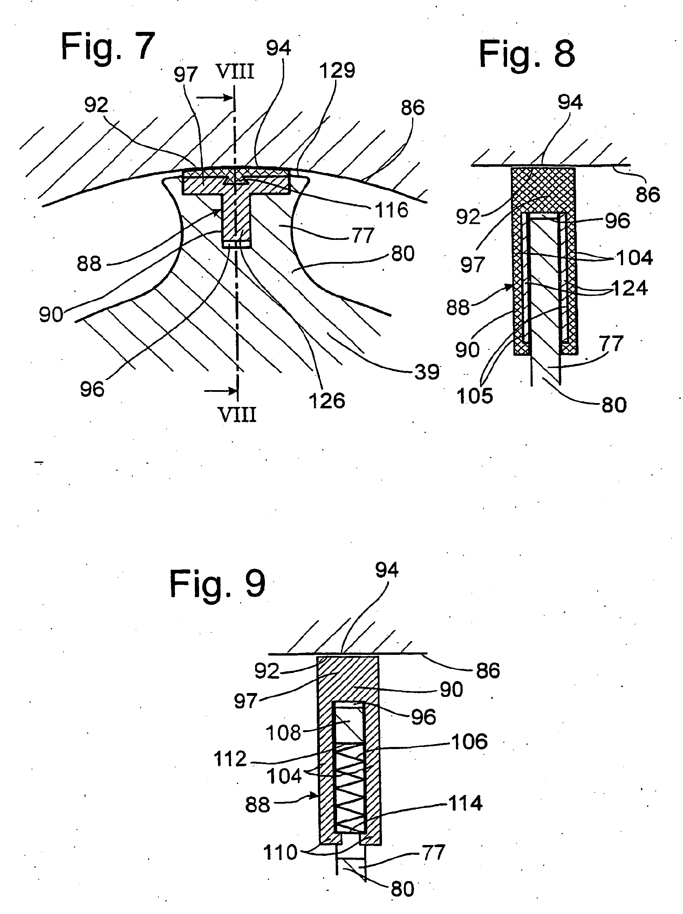

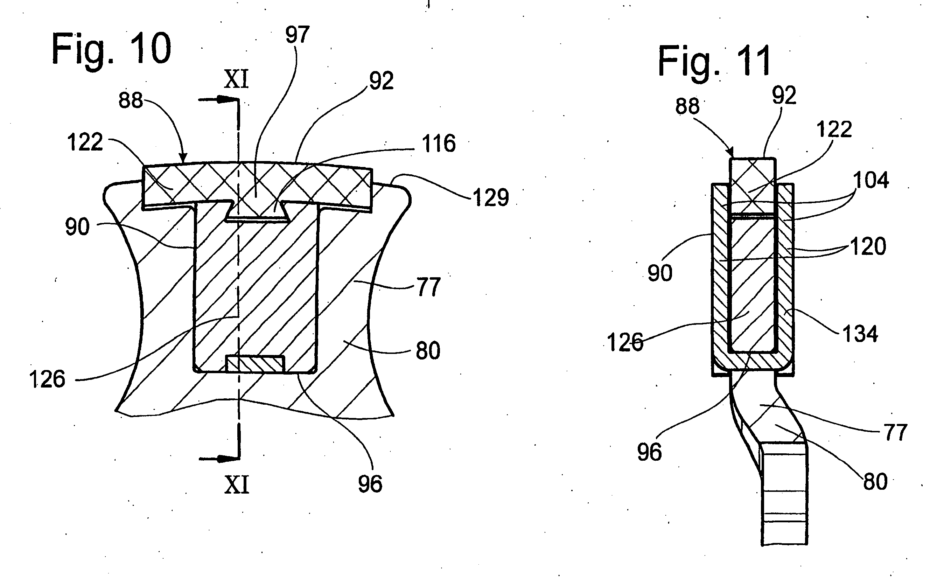

Fig. 7 lässt eine Reibvorrichtung 88 mit einem Reibelement 90 erkennen, das bezüglich seiner geometrischen Ausgestaltung und Anordnung in der Aufnahmetasche 96 im wesentlichen dem Reibelement 90 in Fig. 4 entspricht, bei dem allerdings zur Bildung seines Reibbereiches 92 der Werkstoff hohen spezifischen Gewichtes mit einer Beschichtung 132 versehen ist, gebildet durch einen Werkstoff mit guten Gleiteigenschaften. Um die Sicherheit gegen ein Lösen dieser Beschichtung 132 zu erhöhen, besteht zwischen den beiden Werkstoffteilen eine Formschlussverbindung 116, im vorliegenden Fall in der Form einer Schwalbenschwanzverbindung. Die Ausführung der Reibvorrichtung 88 gemäß Fig. 7 verbindet eine gute Fliehkraftwirkung durch Ausbildung der wesentlichen Teile des Reibelementes 90 aus einem Werkstoff mit hohem spezifischen Gewicht mit sehr guten, verschleißmindernden Gleiteigenschaften in Umfangsrichtung. Alternativ kann, gemäß Fig. 10, die gesamte Reibelementenbasis 97 aus einem Werkstoff mit guten Gleiteigenschaften ausgebildet sein, der gesamte Steg 126 dagegen aus einem Werkstoff mit hohem spezifischen Gewicht. Auch hier kann die Verbindung der Reibelementenbasis 97 und des Stegs 126 über eine Formschlussverbindung 116 besonders sicher gestaltet sein, beispielsweise durch Ausführung der Formschlussverbindung 116 als Schwalbenschwanzverbindung. In Achsrichtung ist das Reibelement 90 mehrteilig ausgebildet, wobei die Axialbegrenzungen 104 für den Steg 126 an einem im Querschnitt u-förmigen Profilstück 134 vorgesehen sind, das den Steg 126 radial innen umgreift und mit beidseits des Stegs 126 nach radial außen gezogenen Deckplatten 120 bis in den radialen Erstreckungsbereich der Reibelementenbasis 97 sowie bis in den radialen Erstreckungsbereich des Außenumfangs 129 des abtriebsseitigen Ansteuerelementes 77 ragt, und dadurch nicht nur die Reibelementenbasis 97 gegenüber dem Steg 126 axial positioniert, sondern auch gegenüber dem abtriebsseitigen Ansteuerelement 77.

Die Vorteile des Werkstoffes mit guten Gleiteigenschaften werden auch bei der Ausführung der Reibvorrichtung gemäß Fig. 8 genutzt, allerdings sind bei dieser Ausführung die Axialbegrenzungen 104 gemeinsam mit der Reibelementenbasis 97 aus dem gleichen Werkstoff gefertigt. Um trotz dieser Maßnahme einerseits ein genügendes Gewicht und andererseits eine hinreichende Steifigkeit für das Reibelement 90 zu erzielen, verfügt dieses axial zwischen den Axialbegrenzungen 104 und der jeweils benachbarten Axialseite 105 des abtriebsseitigen Übertragungselementes 77 über Versteifungen 124, die vorzugsweise aus einem metallischen Werkstoff bestehen. Eine derartige Ausführung des Reibelementes 90 wird bei Torsionsschwingungsdämpfern Anwendung finden, bei welchen günstigen Gleiteigenschaften der Vorzug gegenüber einer sehr hohen Reibwirkung gegeben wird. Des weiteren ist dieses Reibelement sowohl im Leerlaufbetrieb als auch bei höheren Drehzahlen, beispielsweise oberhalb von 2500 U/min, von Vorteil. Im Leerlauf wird nämlich durch ein derartiges Reibelement nur eine die Entkopplungsgüte nicht nennenswert verschlechternde Wirkung der Reibvorrichtung 88 zugelassen, während bei höheren Drehzahlen, bei welchen eingeleitete Torsionsschwingungen in ihrer Wirkung begrenzt sind, das Reibelement 90 nur eine vergleichbar geringe Wirkung zeigt.

Mit Vorzug wird der Werkstoff mit guten Gleiteigenschaften aus Kunststoff gebildet, insbesondere aus dem gleichen Kunststoff wie die Gleitelemente 84. Möglich ist eine Ausführung ohne Glasfaserverstärkung, aber auch mit Kohle- oder Aramidfasern, gegebenenfalls auch mit Teflonzusatz.

Extrem vorteilhaft bei geringen Drehzahlen, wie beispielsweise bei Leerlaufbetrieb, erweist sich das Reibelement 90 der Reibvorrichtung 88 gemäß Fig. 9. Bei diesem Reibelement 90 ist, radial zwischen einer am abtriebsseitigen Ansteuerelement 77 vorgesehenen äußeren Radialabstützung 108 und einer an den Axialbegrenzungen 104 vorgesehenen inneren Radialabstützung 110 ein Radialenergiespeicher 106 eingespannt, der mit seinem radial äußeren Ende 112 an der Radialabstützung 108 und mit seinem radial inneren Ende 114 an der Radialabstützung 110 zur Anlage kommt. Dieser Radialenergiespeicher 106, der durch die Axialbegrenzungen 104 gegen axiale Ausbeulung gesichert ist, presst bei Ausbildung als Druckfeder das Reibelement 90 gegenüber der Radialabstützung 108 nach radial innen. Bei geringer Drehzahl, insbesondere hierbei im Leerlaufbetrieb, wird durch den Radialenergiespeicher 106 das Reibelement 90 entgegen der Fliehkraft nach radial innen gedrückt, so dass der Reibbereich 92 des Reibelementes 90 nicht an der Reibfläche 94 des antriebsseitigen Übertragungselementes 36 in Anlage gelangen kann, und in diesem Drehzahlbereich die Reibvorrichung 88 keine Wirkung erzielt. Erst bei zunehmender Drehzahl und dadurch bedingter Zunahme der Fliehkraft wird die Wirkung des Radialenergiespeichers 106 überwunden und das Reibelement 90 radial ausgelenkt, so dass dessen Reibbereich 92 an der Reibfläche 94 des antriebsseitigen Übertragungselementes 36 in Anlage gelangt.

Bei Ausbildung des Radialenergiespeichers 106 als Zugfeder kann mit der gleichen Konstruktion erreicht werden, dass das Reibelement 90 bereits ohne Fliehkraftwirkung in Richtung zum antriebsseitigen Übertragungselement 36 beaufschlagt ist, so dass der Reibbereich 92 des Reibelementes 90 bereits im Stillstand mit der Reibfläche 94 des antriebsseitigen Übertragungselementes 36 in Wirkverbindung steht. Dadurch ergibt sich bereits beim Start/Stop-Vorgang, der üblicherweise mit Drehzahlen unterhalb des Leerlaufbetriebes abläuft, eine Reibwirkung durch die Reibvorrichtung 88. Diese Reibwirkung wird mit zunehmendem Anstieg der Betriebsdrehzahl unter Entlastung des Radialenergiespeichers 106 weiter erhöht.

### Bezugszeichenliste

- 1.: Antrieb
- 3.: Kurbelwelle
- 4.: Flansch
- 5.: Gewindebohrungen
- 7.: Befestigungsmittel
- 9.: Schrauben
- 15.: Primärflansch
- 17.: Anlegescheibe
- 19-: Primärnabe
- 20.: Lagerausdrückung
- 23.: Planetenrad
- 25.: Plantetengetriebe
- 27.: Ringwand
- 29.: Zahnkranz
- 31.: Axiallagerung
- 33.: Dichtungswand
- 35.: Fettkammer
- 36.: antriebss. Übertragungselement
- 37.: Axialeindrückung
- 39.: Nabenscheibe
- 41.: Sekundärnabe
- 43.: Radiallagerung
- 44.: Durchgangsöffnung
- 49.: Vernietung
- 51.: Schwungmassenelement
- 53.: abtriebss. Übertragungselement
- 55.: Reibungskupplung
- 57.: Kupplungsgehäuse
- 59.: Membranfeder
- 61.: Anpressplatte
- 63.: Kupplungsscheibe
- 65.: Träger
- 67,69: Reibbeläge
- 73.: Innenverzahnung
- 75.: Hohlrad
- 77.: Ansteuerelemente abtriebsseitig
- 79.: Dämpfungseinrichtung
- 80.: Radialvorsprung
- 81.: Ansteuerelemente antriebsseitig
- 83.: Energiespeichergruppe
- 84.: Gleitelemente
- 85.: Mittenachse
- 86.: Führungsbahn
- 88.: Reibvorrichtung
- 90.: Reibelement
- 92.: Reibbereich
- 94.: Reibfläche
- 96: Aufnahmetasche
- 97.: Reibelementenbasis
- 98.: erste Bewegungssicherung
- 100.: zweite Bewegungssicherung
- 102.: Umfangsbegrenzungen
- 103.: Umfangsseiten
- 104.: Axialbegrenzungen
- 105.: Axialseiten
- 106.: Radialenergiespeicher
- 108.: Radialabstützung
- 110.: Radialabstützung
- 112.: Ende des Radialenergiespeichers
- 114.: Ende des Radialenergiespeichers
- 116.: Formschlussverbindung
- 118.: Vernietung
- 120.: Deckplatten
- 122.: Trägerring
- 124.: Versteifung
- 126.: Steg
- 127.: radiale Innenseite
- 128.: Stützlaschen
- 129.: Außenumfang
- 130.: Grundfläche der Aufnahmetasche
- 132.: Beschichtung
- 134.: Profilstück

## Patentansprüche

1. Torsionsschwingungsdämpfer, aufweisend ein mit einem Antrieb (1) verbundenes erstes Übertragungselement (36), ein mit einem Abtrieb in Wirkverbindung bringbares, gegenüber dem ersten Übertragungselement (36) drehauslenkbares zweites Übertragungselement (53) und eine zwischen den beiden Übertragungselementen (36, 53) vorgesehene Dämpfungseinrichtung (79) mit Energiespeichergruppen (83), die in einer Führungsbahn (86) des einen ersten Übertragungselementes (36) aufgenommen sind und den Kontakt zum jeweils anderen zweiten Übertragungselement (53) herstellen, und deren Beaufschlagung bei Zugbetrieb durch Ansteuerelemente (81) des ersten Übertragungselementes (36), bei Schubbetrieb dagegen durch Ansteuerelemente (77) des zweiten Übertragungselementes erfolgt,
**dadurch gekennzeichnet, dass**
dass den Ansteuerelementen (77) des zweiten Übertragungselementes (53) Reibvorrichtungen (88) zugeordnet sind, die bei einer vorbestimmten Fliehkraft mit einem Reibbereich (92) einer Reibfläche (94) des ersten Übertragungselementes (36) in Anlage gelangen.

2. Torsionsschwingungsdämpfer nach Anspruch 1,
**dadurch gekennzeichnet, dass**
die Ansteuerelemente (77) des zweiten Übertragungselementes (53) über jeweils eine Aufnahmetasche (96) für je ein relativ zu diesem Ansteuerelement (77) verlagerbares Reibelement (90) der Reibvorrichtung (88) verfügen, wobei diese Reibelemente (90) jeweils in Richtung zur Reibfläche (94) des ersten Übertragungselementes (36) bis zur Anlagebringung an dieser Reibfläche (94) verlagerbar sind.

3. Torsionsschwingungsdämpfer nach Anspruch 2,
**dadurch gekennzeichnet, dass**
die Aufnahmetaschen (96) für die Reibelemente (90) der Reibvorrichtung (88) jeweils an der radialen Außenseite der Ansteuerelemente (77) des zweiten Übertragungselementes (53) vorgesehen sind, die Reibfläche (94) des ersten Übertragungselementes (36) radial außerhalb der Ansteuerelemente (77) des zweiten Übertragungselementes (53) angeordnet ist, und die Reibelemente (90) zur Inanlagebringung ihres jeweiligen Reibbereiches (92) an der Reibfläche (94) fliehkraftbedingt eine Radialbewegung gegenüber der jeweiligen Aufnahmetasche (96) vollziehen.

4. Torsionsschwingungsdämpfer nach einem der Ansprüche 2 oder 3,
**dadurch gekennzeichnet, dass**
die Reibelemente (90) sowohl über eine in Umfangsrichtung wirksame erste Bewegungssicherung (98) als auch über eine in Axialrichtung wirksame zweite Bewegungssicherung (100) zur Vermeidung von Relativbewegungen gegenüber dem jeweiligen Ansteuerelement (77) verfügen.

5. Torsionsschwingungsdämpfer nach Anspruch 4,
**dadurch gekennzeichnet, dass**
die erste Bewegungssicherung (98) durch am jeweiligen Ansteuerelement (77) vorgesehene Umfangsbegrenzungen (102) gebildet ist, an welchen das jeweilige Reibelement (90) an beiden Umfangsseiten (103) abgestützt ist.

6. Torsionsschwingungsdämpfer nach Anspruch 5,
**dadurch gekennzeichnet, dass**
die erste Bewegungssicherung (98) einstückig am jeweiligen Ansteuerelement (77) angeformt ist.

7. Torsionsschwingungsdämpfer nach Anspruch 4,
**dadurch gekennzeichnet, dass**
die zweite Bewegungssicherung (100) durch am jeweiligen Reibelement (90) vorgesehene Axialbegrenzungen (104) gebildet ist, welche mit je einer zugeordneten Axialseite (105) des Ansteuerelementes (77) des zweiten Übertragungselementes (53) zusammenwirken, um das Reibelement (90) jeweils in auf das Ansteuerelement (53) zuweisender Richtung abzustützen.

8. Torsionsschwingungsdämpfer nach Anspruch 7,
**dadurch gekennzeichnet, dass**
die zweite Bewegungssicherung (100) durch einstückig am Reibelement (90) angeformte Axialbegrenzungen (104) gebildet ist.

9. Torsionsschwingungsdämpfer nach Anspruch 7,
**dadurch gekennzeichnet, dass**
die zweite Bewegungssicherung (100) durch am Reibelement (90) befestigte Axialbegrenzungen (104) gebildet ist.

10. Torsionsschwingungsdämpfer nach einem der Ansprüche 1 bis 9,
**dadurch gekennzeichnet, dass**
die Reibelemente (90) aus einem Werkstoff mit hohem spezifischen Gewicht bestehen.

11. Torsionsschwingungsdämpfer nach einem der Ansprüche 2 bis 10,
**dadurch gekennzeichnet, dass**
der jeweilige Reibbereich (92) der Reibelemente (90) und/oder die Reibfläche (94) am ersten Übertragungselement (36) einer festigkeitserhöhenden Fertigungsbehandlung unterworfen ist.

12. Torsionsschwingungsdämpfer nach einem der Ansprüche 2 bis 9,
**dadurch gekennzeichnet, dass**
die Reibelemente (90) zumindest an ihrem jeweiligen Reibbereich (92) aus einem Werkstoff mit guten Gleiteigenschaften besteht, oder zumindest über eine Beschichtung (132) aus einem derartigen Werkstoff verfügt.

13. Torsionsschwingungsdämpfer nach einem der Ansprüche 2 bis 12,
**dadurch gekennzeichnet, dass**
die Reibelemente (90) ihren jeweiligen Reibbereich (92) jeweils an einer Reibelementenbasis (97) aufweisen, die über eine Formschlußverbindung (116) an einem Steg (126) befestigt ist, wobei zumindest der Steg (126) in der Aufnahmetasche (96) aufgenommen ist

14. Torsionsschwingungsdämpfer nach Anspruch 13,
**dadurch gekennzeichnet, dass**
die Formschlußverbindung (116) durch eine Schwalbenschwanzverbindung gebildet ist.

15. Torsionsschwingungsdämpfer nach einem der Ansprüche 13 oder 14,
**dadurch gekennzeichnet, dass**
die die Axialbegrenzungen (104) für den Steg (126) an einem im Querschnitt u-förmigen Profilstück (134) vorgesehen sind, das den Steg (126) radial innen umgreift und mit beidseits des Stegs (126) nach radial außen gezogenen Deckplatten (120) bis in den radialen Erstreckungsbereich der Reibelementenbasis (97) sowie bis in den radialen Erstreckungsbereich des Außenumfangs (129) des abtriebsseitigen Ansteuerelementes (77) ragt, um dadurch nicht nur die Reibelementenbasis (97) gegenüber dem Steg (126) axial zu positionieren, sondern auch gegenüber dem abtriebsseitigen Ansteuerelement (77).

16. Torsionsschwingungsdämpfer nach einem der Ansprüche 2 bis 15,
**dadurch gekennzeichnet, dass**
die zweite Bewegungssicherung (100) einstückig mit dem Reibbereich (92) des Reibelementes (90) aus einem Werkstoff mit guten Gleiteigenschaften ausgebildet ist.

17. Torsionsschwingungsdämpfer nach einem der Ansprüche 2 bis 16,
**dadurch gekennzeichnet, dass**
die Reibelemente (90) jeweils durch einen Radialenergiespeicher (106) beaufschlagt sind.

18. Torsionsschwingungsdämpfer nach Anspruch 17,
**dadurch gekennzeichnet, dass**
der Radialenergiespeicher (106) das jeweilige Reibelemente (90) entgegen der Fliehkraft beaufschlagt.

19. Torsionsschwingungsdämpfer nach Anspruch 17,
**dadurch gekennzeichnet, dass**
der Radialenergiespeicher (106) das jeweilige Reibelemente (90) in Richtung der Fliehkraft beaufschlagt.

20. Torsionsschwingungsdämpfer nach Anspruch 17, 18 oder 19,
**dadurch gekennzeichnet, dass**
eine radial außerhalb des Radialenergiespeichers (106) vorgesehene erste Radialabstützung (108) am jeweiligen Ansteuerelement (77) des zweiten Übertragungselementes (53) ein radial äußeres Ende (112) des Radialenergiespeichers (106) aufnimmt, eine zweite Radialabstützung (110) am Reibelement (90) dagegen ein radial inneres Ende (114) des Radialenergiespeichers (106).

21. Torsionsschwingungsdämpfer nach einem der Ansprüche 2 bis 20 mit einem als antriebsseitiges Übertragungselement wirksamen ersten Übertragungselement (36) und mit einem als abtriebsseitiges Übertragungselement wirksamen zweiten Übertragungselement (53), das zumindest über eine Schwungmasse (51) und eine mit derselben drehfeste Nabenscheibe (39) verfügt, wobei die Ansteuerelemente (77) des zweiten Übertragungselementes (53) durch Radialvorsprünge (80) der Nabenscheibe (39) gebildet sind,
**dadurch gekennzeichnet, dass**
die Aufnahmetaschen (96) für das jeweilige Reibelement (90) der Reibvorrichtung (88) im jeweiligen Radialvorsprung (80) der Nabenscheibe (39) vorgesehen ist, und der jeweilige Reibbereich (92) jedes Reibelementes (90) zur Inanlagebringung mit der als Reibfläche (94) des ersten Übertragungselementes (36) dienenden Führungsbahn (86) für die Energiespeichergruppe (83) der Dämpfungseinrichtung (79) vorgesehen ist.

## Claims

1. Torsional vibration damper, comprising a first transmission element (36) connected to a drive (1), a second transmission element (53) which can be brought into operative connection to the first transmission element (36) and is rotationally deflectable with respect thereto, and a damping device (79) provided between the two transmission elements (36, 53) which has energy storage groups (83) which are received in a guide path (86) of the one first transmission element (36) and establish the contact with the respective other second transmission element (53), and loading of which energy storage groups (83) in traction operation is effected by control elements (81) of the first transmission element (36) and, conversely, in overrun operation by control elements (77) of the second transmission element, **characterised in that** friction devices (88), which move into abutment with a friction area (92) of a friction surface (94) of the first transmission element (36) upon attainment of a predetermined centrifugal force, are associated with the control elements (77) of the second transmission element (53).

2. Torsional vibration damper according to Claim 1, **characterised in that** the control elements (77) of the second transmission element (53) each have a respective receiving pocket (96) for a friction element (90), which is displaceable relative to this control element (77), of the friction device (88), these friction elements (90) each being displaceable in the direction of the friction surface (94) of the first transmission element (36) until they are brought into abutment against this friction surface (94).

3. Torsional vibration damper according to Claim 2, **characterised in that** the receiving pockets (96) for the friction elements (90) of the friction device (88) are each provided on the radially outer side of the respective control elements (77) of the transmission element (53), the friction surface (94) of the first transmission element (36) is arranged radially outside the control elements (77) of the second transmission element (53), and the friction elements (90) perform, through the action of centrifugal force, a radial movement with respect to the respective receiving pocket (96) in order to bring their respective friction area (92) into abutment against the friction surface (94).

4. Torsional vibration damper according to either of Claims 2 and 3, **characterised in that** the friction elements (90) have a first movement-preventing element (98) acting in the circumferential direction and a second movement-preventing element (100) acting in the axial direction, in order to prevent relative movements with respect to the respective control element (77).

5. Torsional vibration damper according to Claim 4, **characterised in that** the first movement-preventing element (98) is formed by circumferential delimitations (102) provided on the respective control element (77), on which circumferential delimitations (102) the respective friction element (90) is supported on both circumferential sides (103).

6. Torsional vibration damper according to Claim 5, **characterised in that** the first movement-preventing element (98) is formed integrally on the respective control element (77).

7. Torsional vibration damper according to Claim 4, **characterised in that** the second movement-preventing element (100) is formed by axial delimitations (104) provided on the respective friction element (90), which axial delimitations (104) each cooperate with a respective associated axial side (105) of the control element (77) of the second transmission element (53) in order to support the friction element (90) in the direction oriented towards the respective control element (53).

8. Torsional vibration damper according to Claim 7, **characterised in that** the second movement-preventing element (100) is formed by axial delimitations (104) formed integrally on the friction element (90).

9. Torsional vibration damper according to Claim 7, **characterised in that** the second movement-preventing element (100) is formed by axial delimitations (104) fixed to the friction element (90).

10. Torsional vibration damper according to any one of Claims 1 to 9, **characterised in that** the friction elements (90) are made from a material with high specific gravity.

11. Torsional vibration damper according to any one of Claims 2 to 10, **characterised in that** the respective friction area (92) of the friction elements (90) and/or the friction surface (94) on the first transmission element (36) is subjected to a strength-increasing treatment during fabrication.

12. Torsional vibration damper according to any one of Claims 2 to 9, **characterised in that** the friction elements (90) consist, at least on their respective friction area (92), of a material with good sliding properties, or at least have a coating (132) made of such a material.

13. Torsional vibration damper according to any one of Claims 2 to 12, **characterised in that** the friction elements (90) each have their friction area (92) on a respective friction element base (97) which is fastened by means of a form-fitting connection (116) to a bar (126), at least the bar (126) being received in the receiving pocket (96).

14. Torsional vibration damper according to Claim 13, **characterised in that** the form-fitting connection (116) is formed by a dovetail connection.

15. Torsional vibration damper according to either of Claims 13 and 14, **characterised in that** the axial delimitations (104) for the bar (126) are provided on a profile piece (134) with a U-shaped cross section which extends around the bar (126) radially inside same, and which has radially outwardly-extending cover plates (120) projecting on both sides of the bar (126) into the radial range of extension of the friction element base (97) and into the radial range of extension of the outer periphery (129) of the output-side control element (77), in order thereby to position the friction element base (97) axially not only with respect to the bar (126) but also with respect to the output-side control element (77).

16. Torsional vibration damper according to any one of Claims 2 to 15, **characterised in that** the second movement-preventing element (100) is formed integrally with the friction area (92) of the friction element (90) from a material with good sliding properties.

17. Torsional vibration damper according to any one of Claims 2 to 16, **characterised in that** the friction elements (90) are each impinged upon by a radial energy storage device (106).

18. Torsional vibration damper according to Claim 17, **characterised in that** the radial energy storage device (106) loads the respective friction element (90) against centrifugal force.

19. Torsional vibration damper according to Claim 17, **characterised in that** the radial energy storage device (106) loads the respective friction element (90) in the direction of centrifugal force.

20. Torsional vibration damper according to Claim 17, 18 or 19, **characterised in that** a first radial support (108), provided radially outside the radial energy storage device (106) on the respective control element (77) of the second transmission element (53), receives a radially outer end (112) of the radial energy storage device (106), while a second radial support (110) on the friction element (90) receives a radially inner end (114) of the radial energy storage device (106).

21. Torsional vibration damper according to any one of Claims 2 to 20, comprising a first transmission element (36) acting as a drive-side transmission element and a second transmission element (53) acting as an output-side of transmission element, which second transmission element (53) has at least one flywheel mass (51) and a hub disc (39) connected non-rotatably thereto, the control elements (77) of the second transmission element (53) being formed by radial projections (80) of the hub disc (39), **characterised in that** the receiving pocket (96) for the respective friction element (90) of the friction device (88) is provided in the respective radial projection (80) of the hub disc (39), and the respective friction area (92) of each friction element (90) is provided to be brought into abutment with the guide path (86) for the energy storage group (83) of the damping device (79), which guide path (86) serves as the friction surface (94) of the first transmission element (36).

## Revendications

1. Amortisseur de vibrations torsionnelles, présentant un premier élément de transmission (36) relié à un entraînement (1), un deuxième élément de transmission (53) déviable rotativement par rapport au premier élément de transmission (36), pouvant être amené en liaison opérationnelle avec un arbre de sortie et un dispositif d'amortissement (79) avec des groupes accumulateurs d'énergie (83) prévu entre les deux éléments de transmission (36, 53), lesquels groupes sont renfermés dans une voie de guidage (86) du premier élément de transmission (36) et établissent le contact avec respectivement l'autre deuxième élément de transmission (53), et dont la sollicitation en fonctionnement de traction est effectuée par des éléments de commande (81) du premier élément de transmission (36), et inversement en fonctionnement de poussée par des éléments de commande (77) du deuxième élément de transmission,
**caractérisé en ce que**
des dispositifs de friction (88) sont coordonnés aux éléments de commande (77) du deuxième élément de transmission (53), lesquels viennent reposer en présence d'une force centrifuge prédéterminée sur une zone de friction (92) d'une surface de friction (94) du premier élément de transmission (36).

2. Amortisseur de vibrations torsionnelles selon la revendication 1,
**caractérisé en ce que**
les éléments de commande (77) du deuxième élément de transmission (53) disposent respectivement d'une poche de réception (96) pour chaque élément de friction (90) du dispositif de friction (88) déplaçable par rapport à cet élément de commande (77), moyennant quoi ces éléments de friction (90) sont déplaçables respectivement dans la direction de la surface de friction (94) du premier élément de transmission (36) jusqu'à venir reposer sur cette surface de friction (94).

3. Amortisseur de vibrations torsionnelles selon la revendication 2,
**caractérisé en ce que**
les poches de réception (96) des éléments de friction (90) du dispositif de friction (88) sont prévues respectivement sur les côtés extérieurs radiaux des éléments de commande (77) du deuxième élément de transmission (53), la surface de friction (94) du premier élément de transmission (36) est disposée radialement à l'extérieur des éléments de commande (77) du deuxième élément de transmission (53), et les éléments de friction (90) exécutent, afin que leur surface de friction (92) respective vienne reposer sur la surface de friction (94), un mouvement radial déterminé par la force centrifuge par rapport à la poche de réception (96) respective.

4. Amortisseur de vibrations torsionnelles selon une des revendications 2 ou 3,
**caractérisé en ce que**
les éléments de friction (90) disposent tant d'un premier dispositif de blocage de mouvement (98) agissant dans la direction périphérique que d'un deuxième dispositif de blocage de mouvement (100) agissant dans la direction axiale afin d'éviter des mouvements relatifs par rapport à l'élément de commande (77) respectif.

5. Amortisseur de vibrations torsionnelles selon la revendication 4,
**caractérisé en ce que**
le premier dispositif de blocage de mouvement (98) est formé par des délimitations périphériques (102) prévues sur l'élément de commande (77) respectif, sur lesquelles l'élément de friction respectif (90) est appuyé sur les deux côtés périphériques (103).

6. Amortisseur de vibrations torsionnelles selon la revendication 5,
**caractérisé en ce que**
le premier dispositif de blocage de mouvement (98) est façonné en un seul bloc sur l'élément de commande (77) respectif.

7. Amortisseur de vibrations torsionnelles selon la revendication 4,
**caractérisé en ce que**
le deuxième dispositif de blocage de mouvement (100) est formé par des délimitations axiales (104) prévues sur l'élément de friction respectif (90), lesquelles coopèrent chacune avec un côté axial (105) coordonné de l'élément de commande (77) du deuxième élément de transmission (53), afin d'appuyer l'élément de friction (90) respectivement dans la direction orientée vers l'élément de commande (53).

8. Amortisseur de vibrations torsionnelles selon la revendication 7,
**caractérisé en ce que**
le deuxième dispositif de blocage de mouvement (100) est formé par des délimitations axiales (104) façonnées en un seul bloc sur l'élément de friction (90).

9. Amortisseur de vibrations torsionnelles selon la revendication 7,
**caractérisé en ce que**
le deuxième dispositif de blocage de mouvement (100) est formé par des délimitations axiales (104) fixées sur l'élément de friction (90).

10. Amortisseur de vibrations torsionnelles selon une des revendications 1 à 9,
**caractérisé en ce que**
les éléments de friction (90) sont constitués d'un matériau avec un poids spécifique élevé.

11. Amortisseur de vibrations torsionnelles selon une des revendications 2 à 10,
**caractérisé en ce que**
la zone de friction (92) respective des éléments de friction (90) et/ou la surface de friction (94) sur le premier élément de transmission (36) sont soumises à un traitement de finition augmentant la solidité.

12. Amortisseur de vibrations torsionnelles selon une des revendications 2 à 9,
**caractérisé en ce que**
les éléments de friction (90) sont constitués au moins sur leur zone de friction (92) respective d'un matériau avec de bonnes propriétés de glissement ou disposent au moins d'un revêtement (132) en un matériau de ce type.

13. Amortisseur de vibrations torsionnelles selon une des revendications 2 à 12,
**caractérisé en ce que**
les éléments de friction (90) ont leur zone de friction (92) respective, dans chaque cas, sur une base d'élément de friction (97), qui est fixée par une liaison à conjonction de forme (116) sur un gradin (126), moyennant quoi au moins le gradin (126) est renfermé dans la poche de réception (96).

14. Amortisseur de vibrations torsionnelles selon la revendication 13,
**caractérisé en ce que**
la liaison à conjonction de forme (116) est formée par une liaison en queue d'aronde.

15. Amortisseur de vibrations torsionnelles selon une des revendications 13 ou 14,
**caractérisé en ce que**
les délimitations axiales (104) du gradin (126) sont prévues sur une pièce de profilé (134) de section transversale en forme de U, qui s'engage autour du gradin (126) radialement à l'intérieur et dépasse des deux côtés du gradin (126) par des plaques de couvercle (120) tirées radialement vers l'extérieur jusque dans la zone d'extension radiale de la base d'élément de friction (97) ainsi que dans la zone d'extension radiale de la périphérie externe (129) de l'élément de commande (77) du côté d'arbre de sortie, afin de positionner ainsi la base d'élément de friction (97) axialement non seulement par rapport au gradin (126) mais aussi par rapport à l'élément de commande (77) du côté d'arbre de sortie.

16. Amortisseur de vibrations torsionnelles selon une des revendications 2 à 15,
**caractérisé en ce que**
le deuxième dispositif de blocage de mouvement (100) est réalisé en un seul bloc avec la zone de friction (92) de l'élément de friction (90) dans un matériau ayant de bonnes propriétés de glissement.

17. Amortisseur de vibrations torsionnelles selon une des revendications 2 à 16,
**caractérisé en ce que**
les éléments de friction (90) sont respectivement sollicités par un accumulateur d'énergie radiale (106).

18. Amortisseur de vibrations torsionnelles selon la revendication 17,
**caractérisé en ce que**
l'accumulateur d'énergie radiale (106) sollicite l'élément de friction (90) respectif en sens contraire à la force centrifuge.

19. Amortisseur de vibrations torsionnelles selon la revendication 17,
**caractérisé en ce que**
l'accumulateur d'énergie radiale (106) sollicite l'élément de friction (90) respectif dans le sens de la force centrifuge.

20. Amortisseur de vibrations torsionnelles selon la revendication 17, 18 ou 19,
**caractérisé en ce que**
un premier appui radial (108) prévu radialement à l'extérieur de l'accumulateur d'énergie radiale (106) reçoit sur l'élément de commande (77) respectif du deuxième élément de transmission (53) une extrémité extérieure radiale (112) de l'accumulateur d'énergie radiale (106), un deuxième appui radial (110) sur l'élément de friction (90) reçoit au contraire une extrémité intérieure radiale (114) de l'accumulateur d'énergie radiale (106).

21. Amortisseur de vibrations torsionnelles selon une des revendications 2 à 20 comportant un premier élément de transmission (36) agissant comme élément de transmission du côté d'entraînement et un deuxième élément de transmission (53) agissant comme un élément de transmission du côté de sortie, qui dispose au moins d'une masse d'inertie (51) et d'une rondelle de moyeu (39) solidaire en rotation avec celle-ci, moyennant quoi les éléments de commande (77) du deuxième élément de transmission (53) sont formés par des saillies radiales (80) de la rondelle de moyeu (39),
**caractérisé en ce que**
la poche de réception (96) de l'élément de friction (90) respectif du dispositif de friction (88) est prévue dans la saillie radiale (80) respective de la rondelle de moyeu (39), et la zone de friction (92) respective de chaque élément de friction (90) est prévue afin de venir reposer sur la voie de guidage (86) du groupe accumulateur d'énergie (83) du dispositif d'amortissement (79), servant de surface de friction (94) du premier élément de transmission (36).
